Europäisches Patentamt

European Patent Office

Office européen des brevets

(19)

(11) Veröffentlichungsnummer: **0 016 462**
**B1**

(12) # EUROPÄISCHE PATENTSCHRIFT

(45) Veröffentlichungstag der Patentschrift:
28.07.82

(51) Int. Cl.³: **G 21 F 9/16**

(21) Anmeldenummer: 80101448.1

(22) Anmeldetag: 19.03.80

(54) **Verfahren zum Reinigen von Mischvorrichtungen.**

(30) Priorität: 19.03.79 DE 2910708

(43) Veröffentlichungstag der Anmeldung:
01.10.80 Patentblatt 80/20

(45) Bekanntmachung des Hinweises auf die Patenterteilung:
28.07.82 Patentblatt 82/30

(84) Benannte Vertragsstaaten:
CH FR

(56) Entgegenhaltungen:
FR A 2 254 861
FR A 2 346 819
US A 4 108 681

(73) Patentinhaber: KRAFTWERK UNION
AKTIENGESELLSCHAFT, Wiesenstrasse 35,
D-4330 Mülheim (Ruhr) (DE)

(72) Erfinder: Bege, Dietmar, Wehneltstrasse 20,
D-8520 Erlangen (DE)
Erfinder: Puthawala, Anwer, Dipl.-Ing., Weiselstrasse 46,
D-8520 Erlangen-Buckenhof (DE)

(74) Vertreter: Mehl, Ernst, Dipl.-Ing., Postfach 22 01 76,
D-8000 München 22 (DE)

## Verfahren zum Reinigen von Mischvorrichtungen

Die Erfindung betrifft ein Verfahren zum Reinigen von Mischvorrichtungen zum Einbetten radioaktiver Abfälle in erhitztes Bitumen, insbesondere von beheizten Schneckenmaschinen, mit einer Abdampfleitung und einer Austragsöffnung, unter Verwendung von Lösungsmitteln, die nach der Reinigung aufgefangen und gelagert werden. Mit der Reinigung sollen einmal Bitumenreste entfernt werden, die beim Abstellen der Mischvorrichtung in dieser verbleiben, zum anderen sind aber auch Salzkrusten oder Fremdkörper zu entfernen, weil diese sonst die beweglichen Teile der Mischvorrichtung blockieren können, mindestens aber Inspektionsarbeiten an der Mischvorrichtung behindern.

Diese Aufgabe wird durch das erfindungsgemässe Reinigungsverfahren gelöst, das dadurch gekennzeichnet ist, dass die Mischvorrichtung von der Abdampfleitung zur Austragsöffnung hin

1. mit einem Lösungsmittel für Bitumen in einer Menge gewaschen wird, die mindestens so gross wie das Volumen der Mischvorrichtung ist,
2. mit etwa der gleichen Menge eines wasserlöslichen Spülmittels gespült wird, das mit dem Lösungsmittel mischbar ist,
3. mit etwa der doppelten Menge chemisch neutralem Wasser (Deionat) gespült wird.

Hierbei sollen in vorteilhafter Ausgestaltung der Erfindung die einzelnen Reinigungsgänge ohne lange Unterbrechung aneinander anschliessen, damit das Lösungsmittel für Bitumen von dem wasserlöslichen Spülmittel ausgetragen wird, soweit noch Reste des Lösungsmittels in der Mischvorrichtung verblieben sind. Ebenso wird das wasserlösliche Spülmittel sodann mit chemisch neutralem Wasser ausgewaschen, so dass die Mischvorrichtung nicht nur frei von Bitumen oder Verkrustungen ist, sondern auch keine Lösungs- und Spülmittelreste mehr vorliegen.

Vorzugsweise wird ein Lösungsmittel mit einem Flammpunkt verwendet, der etwa 150 bis 250° C beträgt. Geeignete Lösungsmittel sind zum Beispiel mehrkernige ringförmige Kohlenwasserstoffe. Bewährt hat sich ein Lösungsmittel, das im Handel in Deutschland unter dem Namen Somil 80 von der Firma Shell erhältlich ist.

Als mit organischen Lösungsmitteln und Wasser mischbares Spülmittel kann, wie gefunden wurde, vorteilhaft Butyldiglykol verwendet werden. Dieses Spülmittel ist mit Wasser unbeschränkt mischbar, so dass es bei der anschliessenden Spülung mit chemisch neutralem Wasser vollständig ausgetragen wird.

Das Lösungsmittel für Bitumen und das wasserlösliche Spülmittel können vorteilhaft an feste Sorbentien, zum Beispiel Bimskies, gebunden werden. Mit Bimskies ist ein Bimsgranulat bezeichnet, das bei einer Teilchengrösse von etwa 4-15 mm Durchmesser ein Schüttgewicht von 250-300 g/l hat. Dabei können Lösungsmittel und Spülmittel vorteilhaft getrennt an Bimskies gebunden werden, um eine unterschiedliche Beseitigung zu ermöglichen. In jedem Fall kann der Bimskies in Bitumen eingebettet und dann zur Endlagerung gegeben werden. Durch Einsatzkörper kann man für einen Abstand zwischen dem Bimskies und Fasswänden sorgen, wenn der Bimskies in Fässern eingelagert werden soll. Der Abstand verringert die Strahlung, die durch die aktivierten Lösungs- und Spülmittel entstehen kann, damit sie an der Aussenseite der Fässer nicht das zulässige Mass überschreitet.

Das zum Nachspülen verwendete neutrale Wasser kann über eine Ölbindemasse gefiltert werden. Diese Ölbindemasse kann dann ihrerseits wieder in Bitumen eingemischt werden. Das gefilterte Wasser dagegen kann in einen Behälter für die einzubettenden Abfälle gegeben werden, so dass es wie diese ohne zusätzlichen Aufwand beseitigt wird.

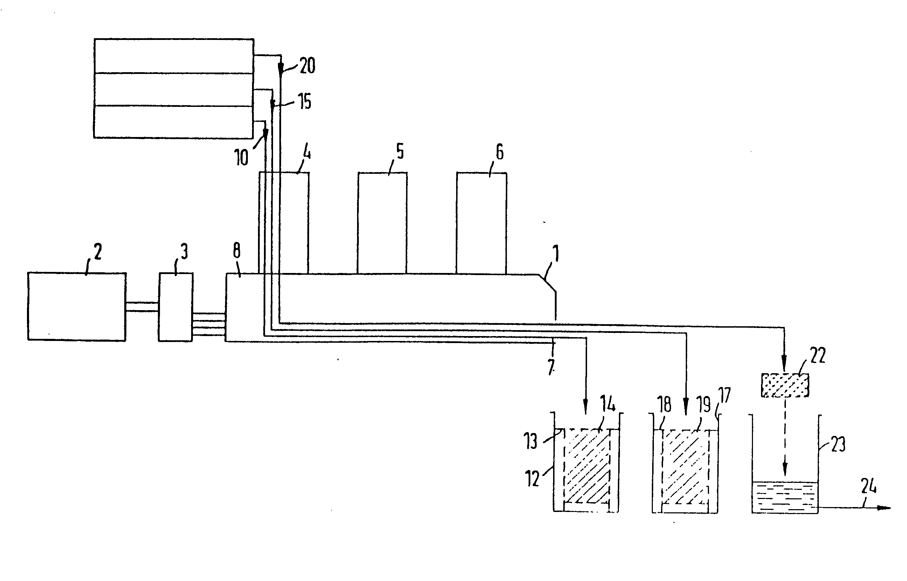

Zur näheren Erläuterung der Erfindung wird anhand der beiliegenden Zeichnung ein Ausführungsbeispiel beschrieben.

Die Zeichnung zeigt in schematischer Darstellung einen Schneckentrockner 1, der in bekannter Weise ausgebildet ist, zum Beispiel so, wie in der US-PS Nr. 3971732 beschrieben ist. Der Schneckentrockner wird von einem Elektromotor 2 über ein Getriebe 3 in Bewegung gesetzt. Er besitzt drei Dampfdome 4, 5 und 6 mit nicht dargestellten Abdampfleitungen und eine Austragsöffnung 7. An dem der Austragsöffnung 7 abgekehrten Ende 8 werden die einzubettenden radioaktiven Abfälle, zum Beispiel Verdampferkonzentrate aus der Abwasseraufbereitungsanlage eines Druckwasserreaktors, und das als Einbettungsmaterial verwendete Bitumen eingegeben.

Nach dem Einbettungsvorgang oder im Falle einer Störung wird der Schneckentrockner 1 in drei aufeinanderfolgenden Schritten gereinigt. Dazu wird zunächst die Austragsöffnung 7 verschlossen. Dann wird als erstes, wie durch den Pfeil 10 angedeutet ist, als Lösungsmittel für Bitumen das schon vorstehend erwähnte Somit 80 bei abgekühltem und stehendem Schneckentrockner eingegeben. Die Menge des Somil entspricht mit 2 l etwa dem freien Volumen des Schneckentrockners. Nach einer Einwirkzeit von 12 bis 24 h wird das Somil abgelassen. Es durchläuft den Schneckentrockner in Richtung zur Austragsöffnung 7. Hinter dieser wird es in einem Fass 12 aufgefangen, das einen Einsatzkörper 13 mit einer Bimskiesfüllung 14 enthält.

In einem zweiten Spülgang, der durch einen Pfeil 15 angedeutet ist, wird der Schneckentrockner 1 anschliessend mit ebenfalls 20 l Butyldiglykol gespült, und zwar wiederum von Dampfdom 4 zur Austragsöffnung 7 hin. Hier reichen 2 h Einwirkzeit aus. Das Butyldiglykol wird dann in einem Fass 17 aufgefangen, das in einem Einsatzkörper 18 ebenfalls Bimskies 19 enthält. Mit dem Butyldiglykol wird gegebenenfalls noch im Schneckentrockner vorhandenes Somil ausgewaschen.

Schliesslich wird der Schneckentrockner 1 in einem dritten, durch den Pfeil 20 angedeuteten Spülgang mit zweimal 20 l Deionat und sehr kurzer Einwirkzeit gespült. Deionat ist chemisch neutrales (ionenfreies) Wasser, das an der Austragsöffnung 7 durch einen Ölbinder 22 geführt wird, bevor es in einem Fass 23 aufgefangen wird, aus dem es, wie durch einen Pfeil 24 angedeutet, zu einem Behälter für die einzubettenden Abfälle weiterbefördert wird. Danach wird mit weiterem Deionat im Durchlauf gespült, um restliche Salze auszuwaschen. Dieses Deionat kann unmittelbar in die Abwasseraufbereitung gegeben werden.

Das erfindungsgemässe Verfahren hat sich in der Praxis ausgezeichnet bewährt. Es bewirkt eine einwandfreie Reinigung der als Mischvorrichtung eingesetzten Schneckentrockner, wobei die gebrauchten Reinigungsmittel in einfacher Weise entsorgt werden können. Die zur Reinigung verwendeten Lösungs- und Spülmittel werden nämlich nicht wie sonst üblich, in flüssiger Form abtransportiert sondern dadurch verfestigt und damit endlagerungsfähig, dass die Fässer 12 mit der Bimskiesfüllung, die die Lösungs- und Spülmittel aufgesaugt hat, in der gleichen Anlage mit Bitumen aufgefüllt werden. Statt Bitumen kann auch ein anderes Verfestigungsmittel, zum Beispiel Zementbrei, verwendet werden.

## Patentansprüche

1. Verfahren zum Reinigen von Mischvorrichtungen zum Einbetten radioaktiver Abfälle in erhitztes Bitumen, insbesondere von beheizten Schneckenmaschinen, mit einer Abdampfleitung und einer Austragsöffnung, unter Verwendung von Lösungsmitteln, die nach der Reinigung aufgefangen und gelagert werden, dadurch gekennzeichnet, dass die Mischvorrichtung von der Abdampfleitung zur Austragsöffnung hin
1. mit einem Lösungsmittel für Bitumen in einer Menge gewaschen wird, die mindestens so gross wie das Volumen der Mischvorrichtung ist,
2. mit etwa der gleichen Menge eines wasserlöslichen Spülmittels gespült wird, das mit dem Lösungsmittel mischbar ist,
3. mit etwa der doppelten Menge chemisch neutralem Wasser gespült wird.

2. Verfahren nach Anspruch 1, dadurch gekennzeichnet, dass als wasserlösliches Spülmittel in an sich bekannter Weise Butyldiglykol verwendet wird.

3. Verfahren nach einem der beiden Ansprüche 1 oder 2, dadurch gekennzeichnet, dass das Lösungsmittel für Bitumen und das wasserlösliche Spülmittel an Bimskies gebunden werden.

4. Verfahren nach Anspruch 3, dadurch gekennzeichnet, dass das Lösungsmittel und Spülmittel getrennt an Bimskies gebunden werden.

5. Verfahren nach einem der beiden Ansprüche 3 oder 4, dadurch gekennzeichnet, dass der Bimskies in Bitumen eingebettet und dann zur Endlagerung gegeben wird.

6. Verfahren nach einem der Ansprüche 3, 4 oder 5, dadurch gekennzeichnet, dass Bimskies in Einsatzkörpern für Fässer verwendet wird, die für einen Abstand zwischen Bimskies und Fasswand sorgen.

7. Verfahren nach einem der Ansprüche 1 bis 6, dadurch gekennzeichnet, dass das Wasser über eine Ölbindemasse gefiltert wird.

8. Verfahren nach Anspruch 7, dadurch gekennzeichnet, dass das gefilterte Wasser in einen Behälter für die einzubettenden Abfälle gegeben wird.

## Claims

1. A process for cleaning mixing apparatus used for embedding radioactive waste in heated bitumen, in particular for cleaning heated worm-type machines, said apparatus having a vapour exhaust line and a discharge opening, using solvents which, after the cleaning step, are collected and stored, characterized in that, from the vapour exhaust line to the discharge opening, the mixing apparatus
1. is washed with a solvent for bitumen in an amount which is at least as large as the volume of the mixing apparatus;
2. is rinsed with approximately the same amount of a water-soluble rinsing agent which is miscible with the solvent;
3. is rinsed with approximately twice the amount of chemically neutral water.

2. A process as claimed in Claim 1, characterized in that butyldiglycol is used in known manner as the water-soluble rinsing agent.

3. A process as claimed in one of Claims 1 or 2, characterized in that the solvent for bitumen and the water-soluble rinsing agent are bonded to granulated pumice.

4. A process as claimed in Claim 3, characterized in that the solvent and the rinsing agent are separately bonded to granulated pumice.

5. A process as claimed in one of Claims 3 or 4, characterized in that the granulated pumice is embedded in bitumen and is then transferred to final storage.

6. A process as claimed in one of Claims 3, 4 or 5, characterized in that granulated pumice is used in filling bodies for barrels, which ensures a spacing between the pumice and the wall of the barrel.

7. A process as claimed in one of Claims 1 to 6, characterized in that the water is filtered through an oil-binding material.

8. A process as claimed in Claim 7, characterized in that the filtered water is put into a container for the waste which is to be embedded.

## Revendications

1. Procédé pour nettoyer des mélangeurs destinés à enrober des déchets radioactifs dans du bitume chauffé, notamment des machines à vis chauffées, et comprenant un conduit d'évacuation de la vapeur et une ouverture de déchargement, en utilisant des solvants qui sont recueillis et stockés après le nettoyage, caractérisé en ce que, du conduit d'évacuation de la vapeur à l'ouverture de déchargement, le mélangeur est:

1. lavé par un solvant pour le bitume en une quantité qui est au moins égale au volume du mélangeur,
2. rincé par à peu près la même quantité d'un agent de rinçage hydrosoluble, miscible au solvant,
3. rincé par à peu près une quantité double d'eau chimiquement neutre.

2. Procédé suivant la revendication 1, caractérisé en ce qu'il consiste à utiliser comme agent de rinçage hydrosoluble du diglycolbutylique d'une manière connue en soi.

3. Procédé suivant l'une des revendications 1 ou 2, caractérisé en ce qu'il consiste à fixer le solvant pour le bitume et l'agent de rinçage hydrosoluble sur de la pierre ponce.

4. Procédé suivant la revendication 3, caractérisé en ce qu'il consiste à fixer le solvant et l'agent de rinçage séparément sur de la pierre ponce.

5. Procédé suivant l'une des revendications 3 ou 4, caractérisé en ce qu'il consiste à enrober la pierre ponce dans le bitume et, ensuite, à l'envoyer au stockage final.

6. Procédé suivant l'une des revendications 3, 4 ou 5, caractérisé en ce qu'il consiste à utiliser de la pierre ponce en corps de remplissage pour des fûts qui servent à maintenir une certaine distance entre la pierre ponce et la paroi du fût.

7. Procédé suivant l'une des revendications 1 à 6, caractérisé en ce qu'il consiste à filtrer l'eau sur une masse de fixation de l'huile.

8. Procédé suivant la revendication 7, caractérisé en ce qu'il consiste à envoyer l'eau filtrée dans un récipient pour les déchets à enrober.

0 016 462